# EUROPEAN PATENT SPECIFICATION

(11) **EP 4 302 616 B1**
(45) Date of publication and mention of the grant of the patent: **03.06.2026**
(21) Application number: 22763582.8
(22) Date of filing: 02.03.2022
(51) Int. Cl.: A23P 20/20, A23P 30/20, A21C 11/00, A21C 11/10, A21C 11/16

(54) **IN-LINE DUMPLING MOLDING SYSTEM**
INLINE-KIPPGIESSSYSTEM
SYSTÈME DE MOULAGE DE BOULETTES DE PÂTE EN LIGNE

(30) Priority: 02.03.2021 KR 20210027477
(43) Date of publication of application: 10.01.2024
(73) Proprietor: CJ Cheiljedang Corporation, Seoul 04560 (KR)
(72) Inventor: JANG, Bong Jin, Seoul 04560 (KR); KIM, Se Jin, Seoul 04560 (KR); JUNG, Da Woon, Seoul 04560 (KR); BAE, Soon Suk, Asan-si Chungcheongnam-do 31487 (KR); KIM, Sang Cheol, Asan-si Chungcheongnam-do 31495 (KR); LEE, Yong Gyu, Cheonan-si Chungcheongnam-do 31163 (KR)
(74) Representative: Bandpay & Greuter
(86) International application number: PCT/KR2022/002942
(87) International publication number: WO 2022/186600

(56) References cited:
- CN-A- 105 360 196
- CN-B- 105 360 196
- CN-B- 106 305 880
- CN-B- 106 305 880
- CN-U- 212 520 602
- KR-A- 20160 099 796
- KR-A- 20160 099 796
- KR-A- 20200 125 435
- KR-B1- 102 073 611
- KR-B1- 102 073 611

## Description

### [Technical Field]

The present disclosure relates to an in-line dumpling forming system, and more particularly, to an in-line dumpling forming system that receives a noodle sheet for a dumpling skin, cuts the dumpling skin, folds the dumpling skin filled with dumpling filling, and thus forms a dumpling.

### [Background Art]

In general, dumplings are made by filling insides of dumpling skins made from wheat flour dough with dumpling filling. In this case, due to difficulty of work of joining the dumpling skins filled with the dumpling filling, in the related art, a person should make the dumplings one by one by hand.

Thus, a lot of time and labor are taken for making the dumplings, and mass production thereof is difficult.

In recent years, to solve this problem, some dumpling forming apparatuses that automatically produce the dumplings have been manufactured. However, a structure thereof is complex, an installation area is large, and thus production capacity is low compared as the installation area.

Further, in a dumpling forming apparatus according to the related art, poor sealing occurs in which, in a process of folding and sealing the dumpling skin filled with the dumpling filling, the dumpling skin is not correctly sealed, and thus the dumpling filling escapes from the dumpling skin.

Also known is KR 2016 0099796 A which discloses a dumpling manufacturing apparatus comprising a molding frame unit moved by a conveyance unit; a dumpling skin supply unit for supplying a dumpling skin to the molding frame unit; a dumpling stuffing supply unit for supplying dumpling stuffing in the dumpling skin supplied to the molding frame unit; a dumpling sealing unit for sealing a dumpling accommodated in the molding frame unit; and a dumpling discharge unit for discharging the dumpling sealed by the dumpling sealing unit.

Also known is CN 106 305 880 B which discloses an automatic dumpling maker comprising a molding assembly, the molding assembly comprising a pair of opposite molding plates reciprocally moving, at least one of the molding plates is provided with a crab claw structure, the crab claw structure comprises multiple hinged crab claws, and after the pair of the molding plates move oppositely and are pressed tightly, the multiple crab claws are relatively pivoted and extruded so that one or more convex ribs are formed on the dumpling belly.

Also known is KR 102 073 611 B1 which relates to a dumpling manufacturing device comprising: a supply unit providing dough skin; a cut unit for cutting the dough skin moving in the longitudinal direction into a plurality of dumpling skin; a support unit to which each of the dumpling skin cut by the cut unit is seated; an injection unit for respectively supplying filling to the dumpling skin seated on the support unit; and a molding unit molding the dumpling skin into which the filling is added to be in a shape of a dumpling.

### [Disclosure]

### [Technical Problem]

Embodiments of the present disclosure provide an in-line dumpling forming system in which an installation area thereof is small, and thus productivity is high as compared to the installation area, and a dumpling may be formed into an accurate shape, and thus the occurrence of defects may be reduced.

### [Technical Solution]

According to an aspect of the present disclosure, there is provided an in-line dumpling forming system including a dumpling skin cutting device that cuts a noodle sheet to form a dumpling skin, a dumpling forming lower folding device which is disposed in a lower area of the dumpling skin cutting device, on which the cut dumpling skin is seated, and which presses and folds the dumpling skin to which dumpling filling is supplied, and a sealing device that is disposed on an upper area of the dumpling forming lower folding device and presses and seals the folded dumpling skin.

The dumpling skin cutting device may include a cutting device frame, a first noodle sheet presser that is supported by the cutting device frame and primarily presses the noodle sheet with a protrusion cutter formed in the dumpling forming lower folding device, and a second noodle sheet presser that is supported by the cutting device frame, is spaced apart from the first noodle sheet presser, and secondarily presses, with the protrusion cutter, the noodle sheet primarily pressed by the first noodle sheet presser.

The first noodle sheet presser may include a first rotational bar part rotatably coupled to the cutting device frame, a first pressing roller part that is rotatably coupled to the first rotational bar part and presses the noodle sheet, and a first height adjusting part that is supported by the cutting device frame, is connected to the first rotational bar part, and adjusts a height of the first pressing roller part with respect to the protrusion cutter by adjusting a rotational angle of the first rotational bar part.

The second noodle sheet presser may include a second rotational bar part rotatably coupled to the cutting device frame, a second pressing roller part that is rotatably coupled to the second rotational bar part and presses the noodle sheet, and a second height adjusting part that is supported by the cutting device frame, is connected to the second rotational bar part, and adjusts a height of the second pressing roller part with respect to the protrusion cutter by adjusting a rotational angle of the second rotational bar part.

The sealing device may include a sealing pressing unit including a first sealing pad that presses the dumpling skin folded by the dumpling forming lower folding device and a second sealing pad that is spaced apart from the first sealing pad and presses the dumpling skin in a direction of the first sealing pad, a sealing cam rail unit that is connected to the sealing pressing unit and moves the first sealing pad and the second sealing pad, and a sealing moving unit that is connected to the sealing pressing unit and moves the sealing pressing unit relative to the sealing cam rail unit.

A plurality of sealing pressing units may be provided, and the plurality of sealing pressing units may be arranged in a caterpillar form.

The sealing pressing unit may include a sealing support plate part connected to the sealing moving unit, a first moving plate part which is coupled to the sealing support plate part to be relatively movable and to which the first sealing pad is coupled, a first moving plate moving part coupled to the first moving plate part, connected to the sealing cam rail unit, and moves the first moving plate part, a second moving plate part which is coupled to the sealing support plate part to be relatively movable and to which the second sealing pad is coupled, a second moving plate moving part coupled to the second moving plate part, connected to the sealing cam rail unit, and moves the second moving plate part, a first original position returning part that is coupled to the sealing support plate part, is connected to the first moving plate part, and returns the first moving plate part moved by the first moving plate moving part to an original position thereof, and a second original position returning part that is coupled to the sealing support plate part, is connected to the second moving plate part, and returns the second moving plate part moved by the second moving plate moving part to an original position thereof.

The first moving plate moving part may include a first rotation center shaft coupled to the first moving plate part, and a first rotating roller rotatably coupled to the first rotation center shaft.

The second moving plate moving part may include a second rotation center shaft coupled to the second moving plate part, and a second rotating roller rotatably coupled to the second rotation center shaft.

The first original position returning part may include a first returning fixing block coupled to the sealing support plate part, a first moving plate protrusion block coupled to the first moving plate part and passing through a first through-hole formed in the sealing support plate part, and a first returning elastic body that is coupled to the first returning fixing block, is connected to the first moving plate protrusion block, and presses the first moving plate protrusion block.

The second original position returning part may include a second returning fixing block coupled to the sealing support plate part, a second moving plate protrusion block coupled to the second moving plate part and passing through a second through-hole formed in the sealing support plate part, and a second returning elastic body coupled to the second returning fixing block, connected to the second moving plate protrusion block, and configured to press the second moving plate protrusion block.

The sealing cam rail unit may include a first sealing support rail part in which the first rotating roller moves along a side surface thereof, and a second sealing support rail part in which the second rotating roller moves along a side surface thereof.

### [Advantageous Effects]

An in-line dumpling forming system according to embodiments of the present disclosure may include a dumpling skin cutting device that forms a dumpling skin by cutting a noodle sheet, a dumpling forming lower folding device that is disposed in a lower area of the dumpling skin cutting device and presses and folds the dumpling skin to which dumpling filling is supplied, and the sealing device that is disposed in an upper area of the dumpling forming lower folding device and presses and seals the folded dumpling skin. Thus, an installation area may be reduced by positioning the dumpling skin cutting device and the sealing device on the upper area of the dumpling forming lower folding device. Accordingly, productivity is high compared to the installation area, and the dumpling may be formed into an accurate shape, and thus occurrence of defects may be reduced.

### [Description of Drawings]

FIG. 1 is a view illustrating an in-line dumpling forming system according to an embodiment of the present disclosure.
FIG. 2 is a view illustrating a right surface of FIG. 1.
FIG. 3 is a view illustrating a dumpling skin cutting device of FIG. 1.
FIG. 4 is a plan view illustrating a dumpling skin pressing unit of FIG. 1.
FIGS. 5 and 6 are views illustrating a foldable rotation driving module of the dumpling skin pressing unit.
FIG. 7 is a cross sectional view along line A-A of FIG. 4.
FIGS. 8 and 9 are views illustrating a foldable cam rail unit of FIG. 1.
FIG. 10 is a plan view illustrating a sealing pressurization unit of FIG. 1.
FIG. 11 is a front view of FIG. 10.
FIG. 12 is a cross sectional view along line B-B of FIG. 10.
FIG. 13 is a cross sectional view along line C-C of FIG. 10.
FIG. 14 is a plan view illustrating a sealing cam rail unit of FIG. 1.

### [Mode for Invention]

To fully understand the present disclosure, operational advantages of the present disclosure, and purposes achieved by implementing the present disclosure, the accompanying drawings illustrating embodiments of the present disclosure and contents described in the accompanying drawings should be referenced.

Hereinafter, embodiments of the present disclosure will be described with reference to the accompanying drawings, and thus the present disclosure will be described in detail. However, in describing the present disclosure, descriptions of already widely known functions and configurations will be omitted to make the subject matter of the present disclosure clear.

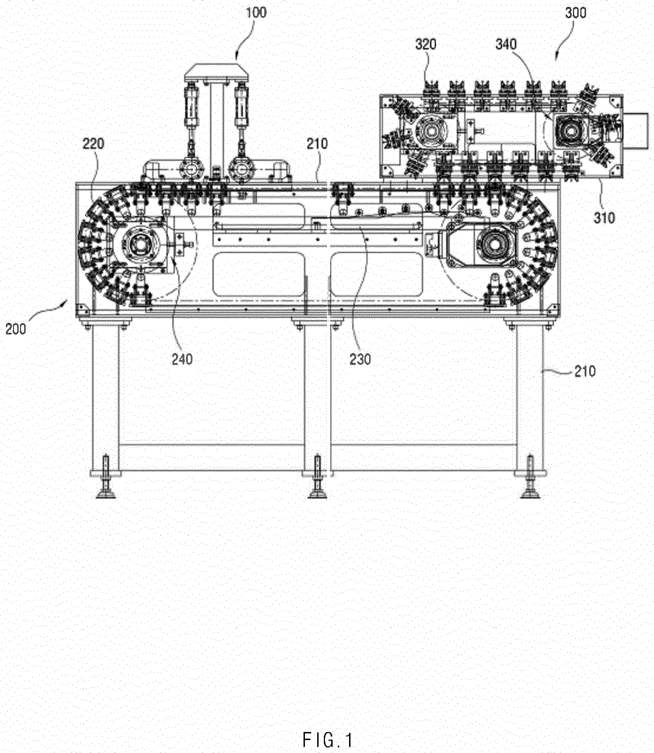

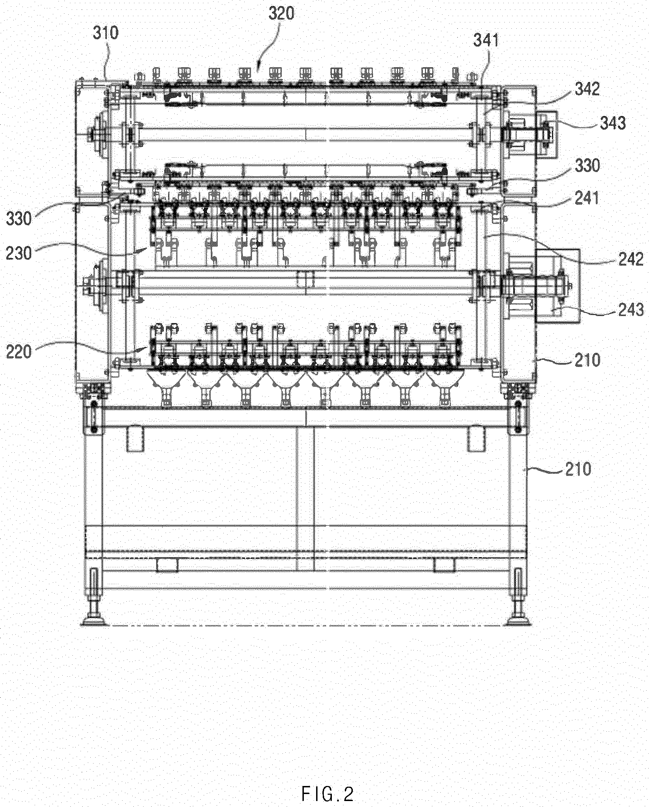

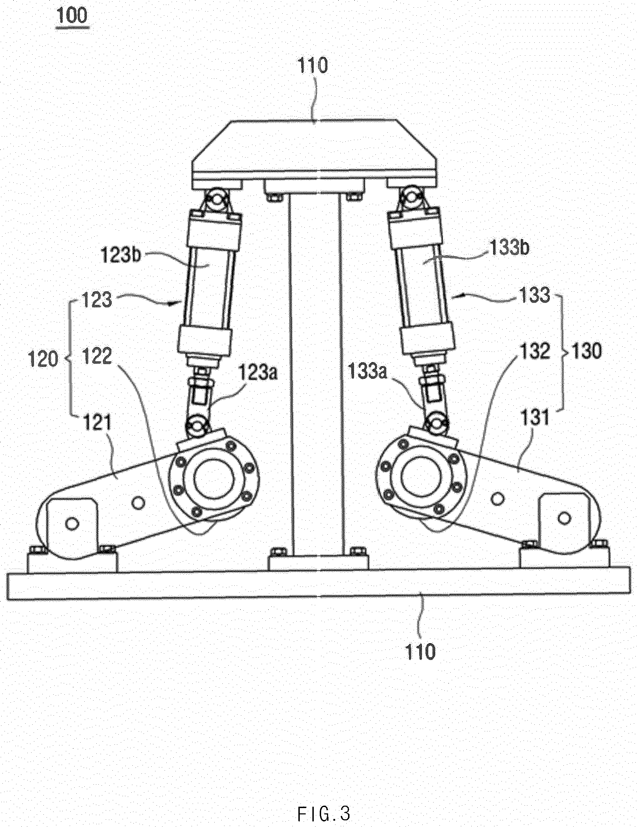

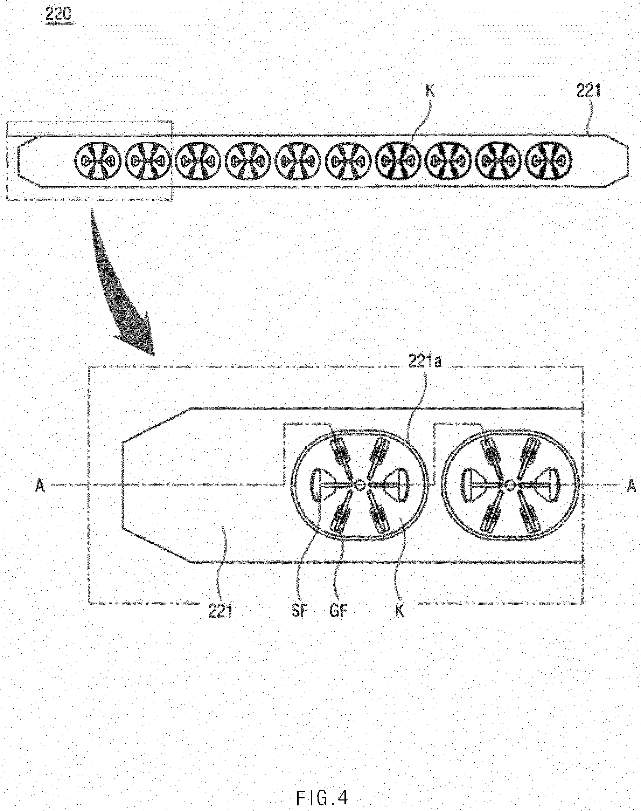

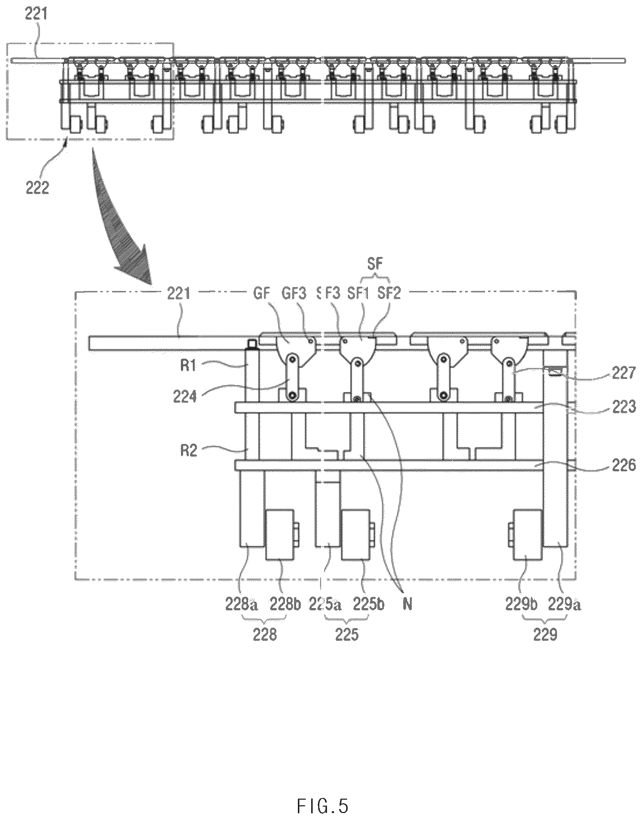

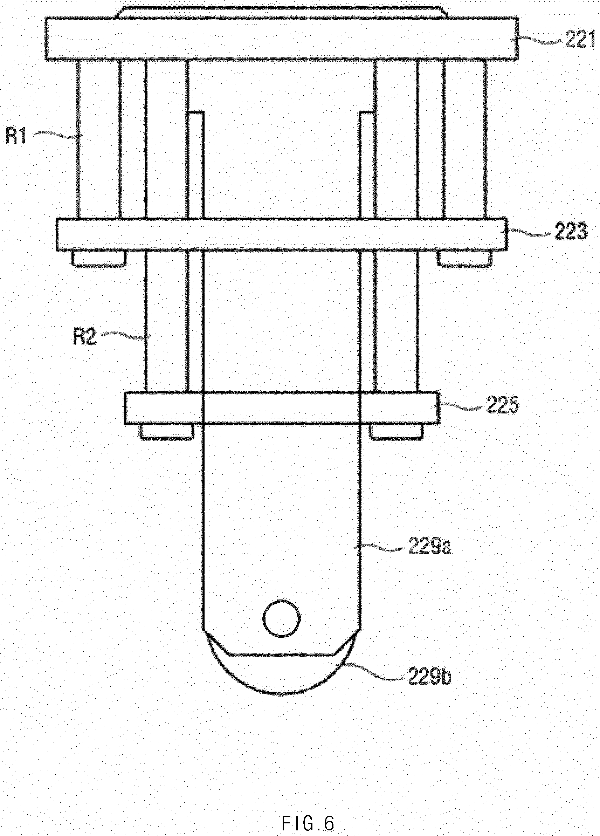

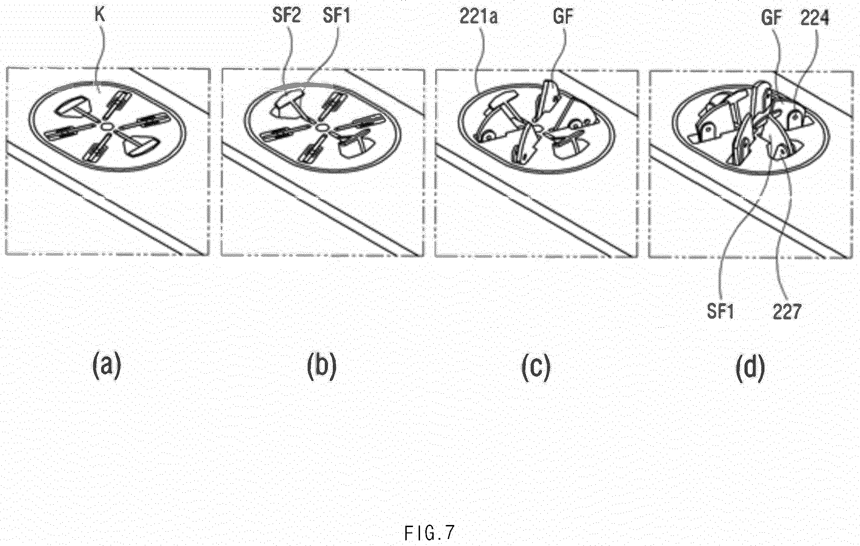

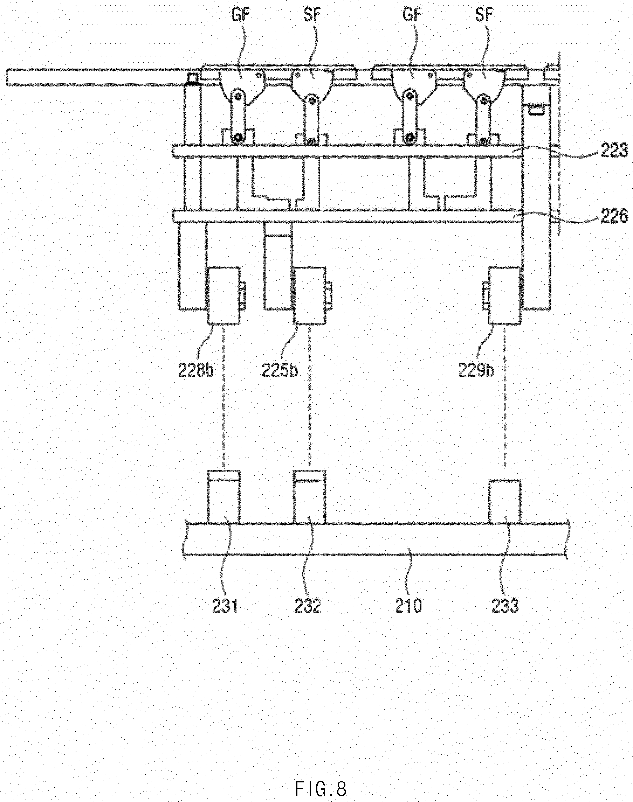

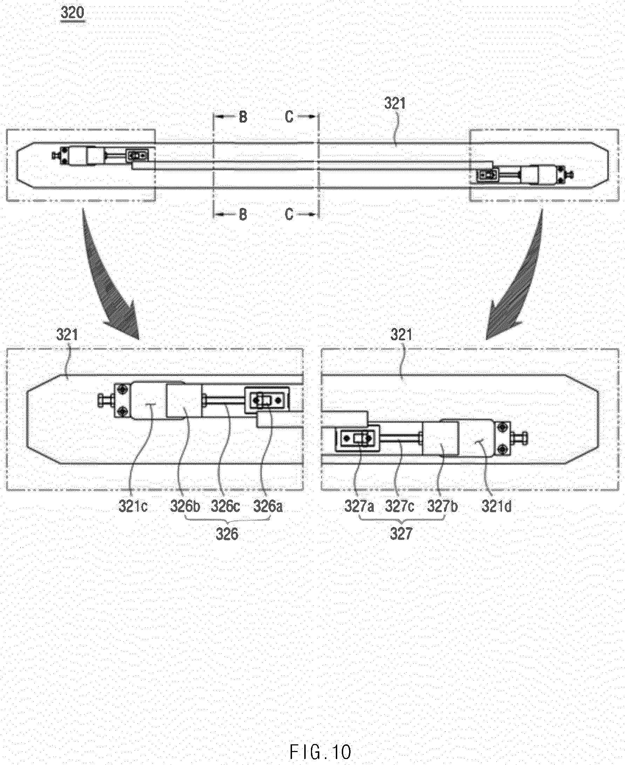

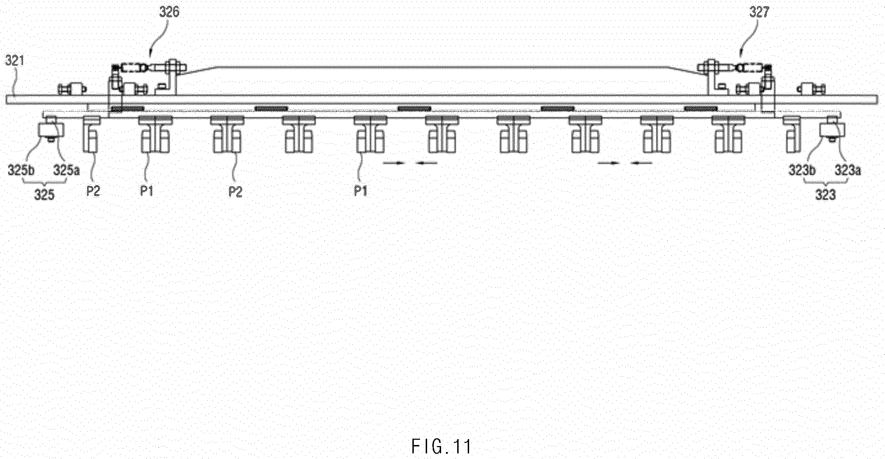

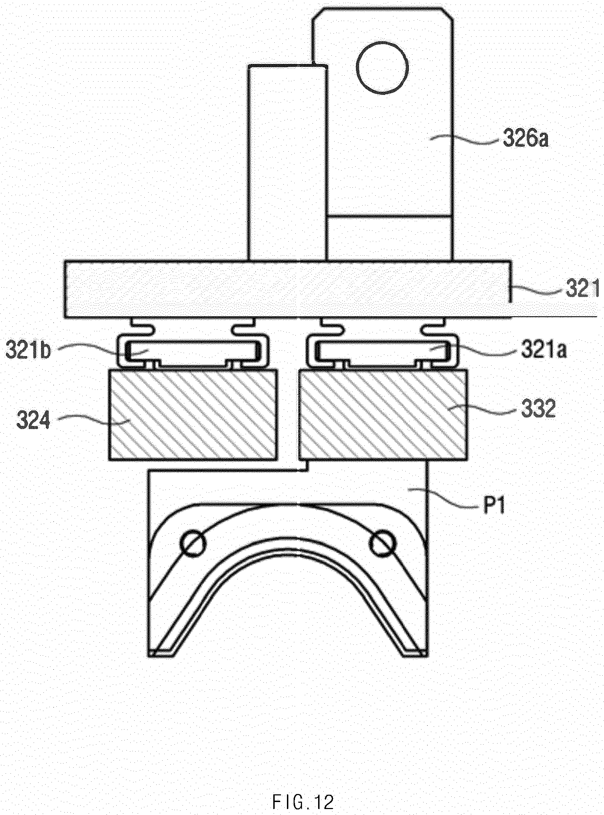

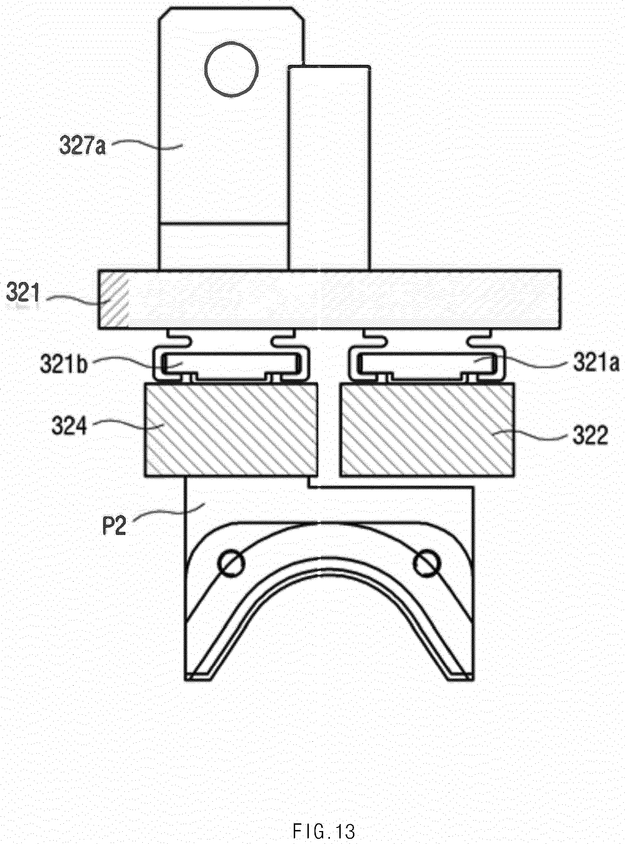

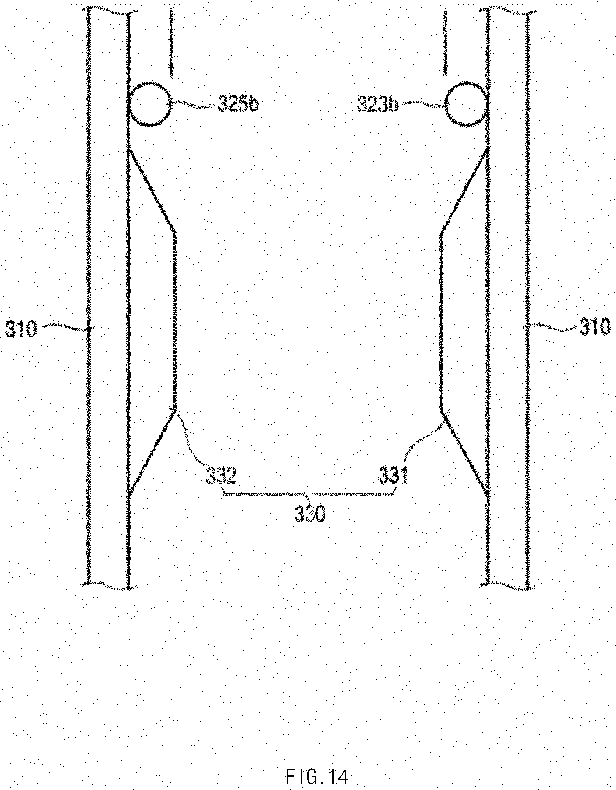

FIG. 1 is a view illustrating an in-line dumpling forming system according to an embodiment of the present disclosure, FIG. 2 is a view illustrating a right surface of FIG. 1, FIG. 3 is a view illustrating a dumpling skin cutting device of FIG. 1, FIG. 4 is a plan view illustrating a dumpling skin pressing unit of FIG. 1, FIGS. 5 and 6 are views illustrating a foldable rotation driving module of the dumpling skin pressing unit, FIG. 7 is a cross sectional view along line A-A of FIG. 4, FIGS. 8 and 9 are views illustrating a foldable cam rail unit of FIG. 1, FIG. 10 is a plan view illustrating a sealing pressurization unit of FIG. 1, FIG. 11 is a front view of FIG. 10, FIG. 12 is a cross sectional view along line B-B of FIG. 10, FIG. 13 is a cross sectional view along line C-C of FIG. 10, and FIG. 14 is a plan view illustrating a sealing cam rail unit of FIG. 1.

As illustrated in FIGS. 1 to 14, the in-line dumpling forming system according to the present embodiment may include a noodle sheet supply device (not illustrated ) that supplies a noodle sheet for a dumpling skin, a dumpling skin cutting device 100, a dumpling filling supply device (not illustrated) that supplies dumpling filling to a cut dumpling skin, a dumpling forming lower folding device 200, and a sealing device 300.

The noodle sheet supply device (not illustrated) may be disposed adjacent to the dumpling skin cutting device 100 and supply the noodle sheet for the dumpling skin to the dumpling skin cutting device 100.

The dumpling skin cutting device 100 may form the dumpling skin (not illustrated) by cutting the supplied noodle sheet for the dumpling skin (not illustrated). As illustrated in FIGS. 1 to 3, the dumpling skin cutting device 100 may include a cutting device frame 110 supported by the dumpling forming lower folding device 200, a first noodle sheet presser 120 that is supported by the cutting device frame 110 and primarily presses the noodle sheet for the dumpling skin with a protrusion cutter 221a formed in the dumpling forming lower folding device 200, and a second noodle sheet presser 130 that is supported by the cutting device frame 110, is spaced apart from the first noodle sheet presser 120, and secondarily presses, with the protrusion cutter 221a, the noodle sheet for the dumpling skin primarily pressed by the first noodle sheet presser 120.

The cutting device frame 110 may be coupled to and supported by a folding device frame 210, which will be described below, of the dumpling forming lower folding device 200.

The first noodle sheet presser 120 may be supported by the cutting device frame 110. The first noodle sheet presser 120 may primarily press the noodle sheet for the dumpling skin toward the protrusion cutter 221a formed in the dumpling forming lower folding device 200, which will be described below.

As illustrated in FIGS. 1 and 3, the first noodle sheet presser 120 according to the present embodiment may include a first rotational bar part 121 rotatably coupled to the cutting device frame 110, a first pressing roller part 122 that is rotatably coupled to the first rotational bar part 121 and presses the noodle sheet for the dumpling skin, and a first height adjusting part 123 that is supported by the cutting device frame 110, is connected to the first rotational bar part 121, and adjusts a height of the first pressing roller part 122 with respect to the protrusion cutter 221a by adjusting a rotational angle of the first rotational bar part 121.

The first rotational bar part 121 may be rotatably coupled to the cutting device frame 110. The first rotational bar part 121 may be formed in a long bar shape.

The first pressing roller part 122 may be rotatably coupled to the first rotational bar part 121. The first pressing roller part 122 may slightly press the noodle sheet for the dumpling skin against the protrusion cutter 221a and thus align the dumpling skin (the noodle sheet for the dumpling skin) before final cutting by the second noodle sheet presser 130.

The first height adjusting part 123 may be supported by the cutting device frame 110. The first height adjusting part 123 may be connected to the first rotational bar part 121 and adjust the height of the first pressing roller part 122 with respect to the protrusion cutter 221a by adjusting a rotation angle of the first rotational bar part 121.

A pressing force of the first pressing roller part 122 may be adjusted by adjusting the height of the first pressing roller part 122 by the first height adjusting part 123.

The first height adjusting part 123 according to the present embodiment may include a first height adjusting cylinder rod 123a rotatably coupled to the first rotational bar part 121 and a first height adjusting pressure cylinder body 123b that is rotatably coupled to the cutting device frame 110 so that the first height adjusting cylinder rod 123a may relatively move, and moves the first height adjusting cylinder rod 123a.

The second noodle sheet presser 130 may be supported by the cutting device frame 110 and spaced apart from the first noodle sheet presser 120. The second noodle sheet presser 130 may form the dumpling skin by secondarily pressing, with the protrusion cutter 221a, the noodle sheet for the dumpling skin, which is primarily pressed by the first noodle sheet presser 120.

As illustrated in FIG. 3, the second noodle sheet presser 130 according to the present embodiment may include a second rotational bar part 131 rotatably coupled to the cutting device frame 110, a second pressing roller part 132 that is rotatably coupled to the second rotational bar part 131 and presses the noodle sheet for the dumpling skin, and a second height adjusting part 133 that is supported by the cutting device frame 110, is connected to the second rotational bar part 131, and adjusts a height of the second pressing roller part 132 with respect to the protrusion cutter 221a by adjusting a rotational angle of the second rotational bar part 131.

The second rotational bar part 131 may be rotatably coupled to the cutting device frame 110. The second rotational bar part 131 may be formed in a long bar shape.

The second pressing roller part 132 may be rotatably coupled to the second rotational bar part 131. The second pressing roller part 132 may finally press the noodle sheet for the dumpling skin slightly pressed by the first pressing roller part 122 toward the protrusion cutter 221a and thus cut the dumpling skin from the noodle sheet for the dumpling skin.

The second height adjusting part 133 may be supported by the cutting device frame 110. The second height adjusting part 133 may be connected to the second rotational bar part 131 and adjust the height of the second pressing roller part 132 with respect to the protrusion cutter 221a by adjusting a rotation angle of the second rotational bar part 131. A pressing force of the second pressing roller part 132 may be adjusted by adjusting the height of the second pressing roller part 132 by the second height adjusting part 133.

The second height adjusting part 133 according to the present embodiment may include a second height adjusting cylinder rod 133a rotatably coupled to the second rotational bar part 131 and a second height adjusting pressure cylinder body 133b that is rotatably coupled to the cutting device frame 110 so that the second height adjusting cylinder rod 133a may relatively move, and moves the second height adjusting cylinder rod 133a.

The dumpling filling supply device (not illustrated) may supply the dumpling filling to the dumpling skin cut by the dumpling skin cutting device 100. The dumpling filling supply device (not illustrated) may be disposed in an upper area of the dumpling forming lower folding device 200 and supply the dumpling filling to an upper surface of the dumpling skin supported by the dumpling forming lower folding device 200 disposed in a lower area. The dumpling filling supply device (not illustrated) according to the present embodiment may be disposed between the dumpling skin cutting device 100 and the sealing device 300.

The dumpling forming lower folding device 200 may be disposed in a lower area of the dumpling skin cutting device 100. The dumpling forming lower folding device 200 may press and fold the dumpling skin, to which the dumpling filling is supplied, from a lower side.

The dumpling forming lower folding device 200 according to the present embodiment may include the folding device frame 210 supported on the ground, a dumpling skin pressing unit 220 having a plurality of dumpling skin folding parts SF and GF that sequentially press the dumpling skin to sequentially fold the dumpling skin, a folding cam rail unit 230 that is disposed adjacent to the dumpling skin pressing unit 220, is connected to the dumpling skin pressing unit 220, and moves the dumpling skin folding parts SF and GF, and a folding moving unit 240 that is connected to the dumpling skin pressing unit 220 and moves the dumpling skin pressing unit 220 relative to the folding cam rail unit 230.

As illustrated in FIG. 1, a plurality of dumpling skin pressing units 220 may be provided and arranged in a caterpillar form. The plurality of dumpling skin pressing units 220 may be coupled to a folding chain part 241, which will be described below, of the folding moving unit 240, may be rotated and transferred according to rotation of the folding chain part 241, and may move the dumpling skin in a direction from the dumpling skin cutting device 100 to the sealing device 300.

As illustrated in FIGS. 1 to 9, the dumpling skin pressing unit 220 may include an upper plate part 221 connected to the folding moving unit 240 and rotatably coupled to the dumpling skin folding parts SF and GF, a folding rotation driving module 222 that is connected to the upper plate part 221 and rotates the dumpling skin folding parts SF and GF, and an upper plate support part 229 connected to the folding cam rail unit 230 and supporting the upper plate part 221.

A dumpling skin seated area "K" on which the dumpling skin cut by the dumpling skin pressing unit 220 is seated may be formed in the upper plate part 221. As illustrated in FIG. 4, a plurality of dumpling skin seated areas "K" may be provided and may be spaced apart from each other in a lengthwise direction of the upper plate part 221. When the dumpling skin folding parts SF and GF are driven, one area of the dumpling skin may be spaced apart from the upper plate part 221.

The upper plate part 221 of the present embodiment may be provided with the protrusion cutter 221a defining a circumference of the dumpling skin seated area "K". The protrusion cutter 221a may protrude from an upper surface of the upper plate part 221 and may be formed in a circular or elliptical shape. The protrusion cutter 221a of the present embodiment may come into contact a lower surface of the noodle sheet for the dumpling skin pressed by the dumpling skin pressing unit 220 so as to cut the dumpling skin in a shape of the protrusion cutter 221a.

The dumpling skin folding parts SF and GF may be rotatably coupled to the upper plate part 221. As illustrated in FIGS. 4 to 8, the dumpling skin folding parts SF and GF may include the support finger SF that primarily presses the dumpling skin and the gathering finger GF that secondarily presses the dumpling skin pressed by the support finger SF and gathers an edge area of the dumpling skin.

In an embodiment, two support fingers SF may be provided and arranged to face each other. The support finger SF may press the dumpling skin in a direction perpendicular to a transfer direction of the dumpling skin pressing unit 220 transferred by the folding moving unit 240.

As illustrated in FIGS. 4 to 7, the support finger SF may be rotated by a preset rotation angle for a first support finger before the gathering finger GF, may press a lower surface of the dumpling skin seated on the dumpling skin seated area "K", may slightly lifts both sides of the dumpling skin, and then may be stopped without the rotation.

As illustrated in FIGS. 4 to 7, the support finger SF according to the present embodiment may include a support body SF1 rotatably coupled to the upper plate part 221 and a support flange SF2 that protrudes from a side wall of the support body SF1 and is in contact with the dumpling skin.

A support rotation center shaft SF3 rotatably coupled to the upper plate part 221 may be formed in the support body SF1.

As illustrated in FIGS. 4 to 7, the support flange SF2 is formed long in a horizontal direction, so that a contact area with the folded dumpling skin may increase, and the dumpling skin may be more strongly pressed.

The gathering finger GF may secondarily press the dumpling skin pressed by the support finger SF. In the present embodiment, as illustrated in FIGS. 4 to 7, four gathering fingers GF are provided and may be radially spaced apart from each other with respect to a center of the dumpling skin seated area "K".

A gathering rotation center shaft GF3 rotatably coupled to the upper plate part 221 may be formed in the gathering finger GF.

After the support finger SF starts to rotate or after the support finger SF is rotated by the rotation angle for the first support finger, the gathering finger GF may be rotated by a preset rotation angle for a gathering finger (see FIG. 7C).

After the gathering finger GF starts to rotate or after the gathering finger GF is rotated by the rotation angle for the gathering finger, the support finger SF may be rotated by a preset rotation angle for a second support finger (see FIG. 7D). Here, the rotation angle for the second support finger may be greater than the rotation angle for the first support finger.

After the support finger SF is rotated by the rotation angle for the first support finger, the gathering finger GF is rotated by the rotation angle for the gathering finger, and then the support finger SF is rotated by the rotation angle for the second support finger. Thus, an edge area of the dumpling skin may be gathered in a center, and the dumpling skin may be folded. The dumpling skin is primarily pressed by the support finger SF, is secondarily pressed by the gathering finger GF, and is then finally pressed by the support finger SF, and thus the dumpling skin may be accurately folded while the dumpling filling does not escape from the dumpling skin.

The folding rotation driving module 222 may be connected to the upper plate part 221. The folding rotation driving module 222 may rotate the dumpling skin folding parts SF and GF.

As illustrated in FIGS. 4 to 7, the folding rotation driving module 222 according to the present embodiment may include an intermediate plate part 223 disposed in a lower area of the upper plate part 221 and connected to the upper plate part 221 to be a relatively movable, a gathering finger link part 224 hinge-coupled to the intermediate plate part 223 and hinge-coupled to the gathering finger GF, an intermediate plate moving part 225 that is connected to the intermediate plate part 223 and moves the intermediate plate part 223 in a direction of the upper plate part 221, a lower plate part 226 disposed in a lower area of the intermediate plate part 223, connected to the upper plate part 221 to be relatively movable, and having a through body "N" passing through the intermediate plate part 223, a support finger link part 227 hinge-coupled to the through body "N" and hinged coupled to the support finger SF, and a lower plate moving part 228 that is connected to the lower plate part 226 and moves the lower plate part 226 in the direction of the upper plate part 221.

The intermediate plate part 223 may be disposed in a lower area of the lower plate part 226. The intermediate plate part 223 may be coupled to an intermediate plate guide shaft R1 coupled to the upper plate part 221 to be slidably movable in a vertical direction and thus may move relative to the upper plate part 221 in the vertical direction.

The gathering finger link part 224 may be formed in a bar shape. One end area of the gathering finger link part 224 may be rotatably coupled to the intermediate plate part 223. Further, the other end area of the gathering finger link part 224 may be rotatably coupled to the gathering finger GF.

The intermediate plate moving part 225 may be connected to the intermediate plate part 223 to move the intermediate plate part 223 in the direction of the upper plate part 221. As illustrated in FIGS. 4 to 7, the intermediate plate moving part 225 according to the present embodiment may include a gathering finger elevating body 225a that passes through the lower plate part 226 and is coupled to the intermediate plate part 223 and a gathering finger rotating roller 225b that is rotatably coupled to the gathering finger elevating body 225a and is connected to the folding cam rail unit 230.

The gathering finger rotating roller 225b may be connected to an upper surface of a gathering finger support rail part 232 of the folding cam rail unit 230 and move along the upper surface of the gathering finger support rail part 232. In this case, the gathering finger rotating roller 225b may move upward according to a shape of the upper surface of the gathering finger support rail part 232, and the upward movement of the gathering finger rotating roller 225b may allow the gathering finger elevating body 225a to move upward.

The upward movement of the gathering finger elevating body 225a may allow the intermediate plate part 223 to be raised in the direction of the upper plate part 221, and the raising of the intermediate plate part 223 may allow the gathering finger link part 224 to be raised, allow the gathering finger GF to be rotated, and allow the gathering finger GF to be raised.

The lower plate part 226 may be disposed in the lower area of the intermediate plate part 223. The lower plate part 226 may be coupled to a lower plate guide shaft R2 coupled to the upper plate part 221 to be slidably movable in the vertical direction and thus may move relative to the upper plate part 221 in the vertical direction.

The through body "N" that is connected to the upper plate part 221 to be relatively movable and passes through the intermediate plate part 223 may be provided in the lower plate part 226. A cut hole (not illustrated), through which the through body "N" passes, may be formed in the intermediate plate part 223.

The support finger link part 227 may be formed in a bar shape. One end area of the support finger link part 227 may be rotatably coupled to the through body "N". Further, the other end area of the support finger link part 227 may be rotatably coupled to the support finger SF.

The lower plate moving part 228 may be connected to the lower plate part 226 to move the lower plate part 226 in the direction of the upper plate part 221.

As illustrated in FIGS. 4 to 7, the lower plate moving part 228 according to the present embodiment may include a support finger elevating body 228a that is coupled to the lower plate part 226 and a support finger rotating roller 228b that is rotatably coupled to the support finger elevating body 228a and is connected to the folding cam rail unit 230.

The support finger rotating roller 228b may be connected to an upper surface of a support finger support rail part 231 of the folding cam rail unit 230 and move along the upper surface of the support finger support rail part 231. In this case, the support finger rotating roller 228b may move upward according to a shape of the upper surface of the support finger support rail part 231, and the upward movement of the support finger rotating roller 228b may allow the support finger elevating body 228a to move upward.

The upward movement of the support finger elevating body 228a may allow the lower plate part 226 to be raised in the direction of the upper plate part 221, the raising of the lower plate part 226 may allow the through body "N" to be raised and allow the support finger link part 227 to be raised, and the raised support finger link part 227 may rotate the support finger SF to raise the support finger SF.

The upper plate support part 229 may be connected to the folding cam rail unit 230 to support the upper plate part 221.

As illustrated in FIGS. 4 to 7, the upper plate support part 229 may include an upper plate support body 229a that is coupled to the upper plate part 221 and an upper plate rotating roller 229b that is rotatably coupled to the upper plate support body 229a and connected to the folding cam rail unit 230.

The upper plate rotating roller 229b may be connected to an upper surface of an upper plate support rail part 233 of the folding cam rail unit 230 and move along the upper surface of the upper plate support rail part 233. Unlike the upper surfaces of the support finger support rail part 231 and the gathering finger support rail part 232, the upper surface of the upper plate support rail part 233 may be formed in a flat shape with no inclination and thus prevent sagging of the upper plate part 221 during a moving process.

The folding cam rail unit 230 may be coupled to the folding device frame 210. The folding cam rail unit 230 may be disposed adjacent to the dumpling skin pressing unit 220 and connected to the dumpling skin pressing unit to move (rotate) the dumpling skin folding parts SF and GF while the dumpling skin pressing unit 220 moves in a direction from the dumpling skin cutting device 100 to the sealing device 300.

As illustrated in FIGS. 1, 8, and 9, the folding cam rail unit 230 according to the present embodiment may include the support finger support rail part 231 in which the support finger rotating roller 228b moves along an upper surface thereof, the gathering finger support rail part 232 which is spaced apart from the support finger support rail part 231 and in which the gathering finger rotating roller 225b moves along an upper surface thereof, and the upper plate support rail part 233 which is spaced apart from the support finger support rail part 231 and the gathering finger support rail part 232 and in which the upper plate rotating roller 229b moves along an upper surface thereof.

The support finger support rail part 231 may be formed in a long bar shape. The support finger rotating roller 228b may move along the upper surface of the support finger support rail part 231.

The gathering finger support rail part 232 may be spaced apart from the support finger support rail part 231. The gathering finger rotating roller 225b may move along the upper surface of the gathering finger support rail part 232.

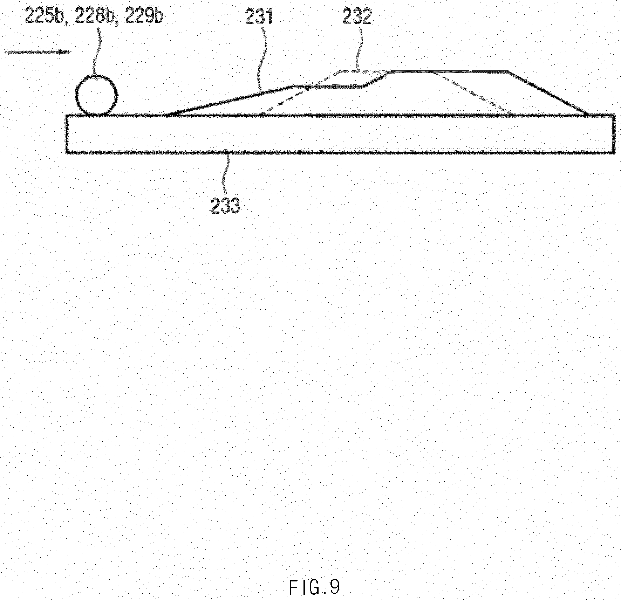

As illustrated in FIG. 9, an upper surface of a front side of the support finger support rail part 231 may be inclined in front of a front side of the gathering finger support rail part 232 so that the support finger rotating roller 228b may be raised before the gathering finger rotating roller 225b.

The gathering finger rotating roller 225b and the support finger rotating roller 228b may move upward according to heights of portions of upper ends of the gathering finger support rail part 232 and the support finger support rail part 231, and the support finger SF and the gathering finger GF may be rotated and raised according to the upward movement of the gathering finger rotating roller 225b and the support finger rotating roller 228b.

The folding moving unit 240 may be connected to the dumpling skin pressing unit 220. The folding moving unit 240 may move the dumpling skin pressing unit 220 relative to the folding cam rail unit 230.

As illustrated in FIGS. 1 and 2, the folding moving unit 240 according to the present embodiment may include the folding chain part 241 coupled to the dumpling skin pressing unit 220, a folding pulley part 242 connected to the folding chain part 241, and a folding driving motor 243 that is connected to the folding pulley part 242 and rotates the folding pulley part 242.

The folding chain part 241 may be coupled to an upper plate of the dumpling skin pressing unit 220. In the present embodiment, a pair of folding chain parts 241 may be provided and may be coupled to both end areas of the upper plate, respectively.

The folding pulley part 242 may be rotatably coupled to the folding device frame 210. The folding pulley part 242 may be connected to the folding chain part 241.

The folding driving motor 243 may be supported by the folding device frame 210. The folding driving motor 243 may be connected to the folding pulley part 242 to rotate the folding pulley part 242.

Meanwhile, the sealing device 300 may be disposed in an upper region of the dumpling forming lower folding device 200. The sealing device 300 may press and seal the dumpling skin folded by the dumpling forming lower folding device 200.

As illustrated in FIGS. 1, 2, and 10 to 14, the sealing device 300 according to the present embodiment may include a sealing device frame 310 supported by the folding device frame 210, a sealing pressing unit 320 including a first sealing pad P1 that presses the dumpling skin folded by the dumpling forming lower folding device 200 and a second sealing pad P2 that is disposed opposite to the first sealing pad P1 to press the dumpling skin in a direction of the first sealing pad P1, a sealing cam rail unit 330 that is disposed adjacent to the sealing pressing unit 320, is connected to the sealing pressing unit 320, and moves the first sealing pad P1 and the second sealing pad P2, and a sealing moving unit 340 that is connected to the sealing pressing unit 320 and moves the sealing pressing unit 320 relative to the sealing cam rail unit 330.

As illustrated in FIGS. 1 and 2, a plurality of sealing pressing units 320 may be provided and arranged in a caterpillar form. The plurality of sealing pressing units 320 may be coupled to a sealing chain part 341, which will be described below, of the sealing moving unit 340, may continuously rotate according to rotation of the sealing chain part 341, and may move in a direction from the dumpling skin cutting device to the sealing device 300.

As illustrated in FIGS. 1, 2, and 10 to 14, the sealing pressing unit 320 according to the present embodiment may include a sealing support plate part 321 connected to the first sealing pad P1 that presses the dumpling skin folded by the dumpling forming lower folding device 200, the second sealing pad P2 that is disposed opposite to the first sealing pad P1 to press the dumpling skin in a direction of the first sealing pad P1, and connected to the sealing moving unit 340, a first moving plate part 322 which is coupled to the sealing support plate part 321 to be relatively movable and to which the first sealing pad P1 is coupled, a first moving plate moving part 323 that is coupled to the first moving plate part 322, is connected to the sealing cam rail unit 330, and moves the first moving plate part 322, a second moving plate part 324 which is coupled to the sealing support plate part 321 to be relatively movable and to which the second sealing pad P2 is coupled, a second moving plate moving part 325 that is coupled to the second moving plate part 324, is connected to the sealing cam rail unit 330, and moves the second moving plate part 324, a first original position returning part 326 that is coupled to the sealing support plate part 321, is connected to the first moving plate part 322, and returns the first moving plate part 322 moved by the first moving plate moving part 323 to an original position thereof, and a second original position returning part 327 that is coupled to the sealing support plate part 321, is connected to the second moving plate part 324, and returns the second moving plate part 324 moved by the second moving plate moving part 325 to an original position thereof.

The first sealing pad P1 and the second sealing pad P2 may be arranged to face each other. A plurality of first sealing pads P1 and a plurality of second sealing pads P2 may be provided and spaced apart from each other. The dumpling having the dumpling skin folded by the dumpling forming lower folding device 200 may be disposed between the first sealing pad P1 and the second sealing pad P2. The first sealing pad P1 and the second sealing pad P2 may approach each other to press the dumpling disposed therebetween so as to finally seal the dumpling skin.

The sealing support plate part 321 may be formed in a long plate shape. Both end areas of the sealing support plate part 321 may be connected to the folding chain part 241, which will be described below, of the sealing moving unit 340.

A first guide rail 321a and a second guide rail 321b to which the first moving plate part 322 and the second moving plate part 324 are slidably coupled may be arranged on a lower surface of the sealing support plate part 321 according to the present embodiment to be spaced apart from each other.

Further, a first through-hole 321c, through which a first moving plate protrusion block 326b, which will be described below, passes, and a second through-hole 321d, through which a second moving plate protrusion block 327b, which will be described below, passes, may be formed in the sealing support plate part 321.

The first moving plate part 322 may be slidably coupled to the first guide rail 321a of the sealing support plate part 321 and move relative to the sealing support plate part 321. The plurality of first sealing pads P1 may be coupled to the first moving plate part 322, and the plurality of first sealing pads P1 may be spaced apart from each other.

The first moving plate moving part 323 may be coupled to the first moving plate part 322. The first moving plate moving part 323 may be connected to a first sealing support rail part 331, which will be described below, of the sealing cam rail unit 330 and move the first moving plate part 322.

As illustrated in FIG. 11, the first moving plate moving part 323 according to the present embodiment may include a first rotation center shaft 323a coupled to the first moving plate part 322 and a first rotating roller 323b rotatably coupled to the first rotation center shaft 323a.

The first rotating roller 323b may be connected to a side surface of the first sealing support rail part 331 of the sealing cam rail unit 330 and move along the side surface of the first sealing support rail part 331. In this case, the first rotating roller 323b may move in a horizontal direction (a leftward direction of FIGS. 10 and 11) according to a shape of the side surface of the first sealing support rail part 331, and the leftward movement of the first rotating roller 323b may allow the first moving plate part 322 to move leftward.

When the first moving plate part 322 moves leftward, the first sealing pad P1 coupled to the first moving plate part 322 may also move leftward.

The second moving plate part 324 may be slidably coupled to the second guide rail 321b of the sealing support plate part 321 and move relative to the sealing support plate part 321. The plurality of second sealing pads P2 may be coupled to the second moving plate part 324, and the plurality of second sealing pads P2 may be spaced apart from each other.

The second moving plate moving part 325 may be coupled to the second moving plate part 324. The second moving plate moving part 325 may be connected to a second sealing support rail part 332, which will be described below, of the sealing cam rail unit 330 and move the second moving plate part 324.

As illustrated in FIG. 11, the second moving plate moving part 325 according to the present embodiment may include a second rotation center shaft 325a coupled to the second moving plate part 324 and a second rotating roller 325b rotatably coupled to the second rotation center shaft 325a.

The second rotating roller 325b may be connected to a side surface of the second sealing support rail part 332 of the sealing cam rail unit 330 and move along the side surface of the second sealing support rail part 332. In this case, the second rotating roller 325b may move in a horizontal direction (a rightward direction of FIGS. 10 and 11) according to a shape of the side surface of the second sealing support rail part 332, and the rightward movement of the second rotating roller 325b may allow the second moving plate part 324 to move rightward.

When the second moving plate part 324 moves rightward, the second sealing pad P2 coupled to the second moving plate part 324 may also move rightward.

The first original position returning part 326 may be coupled to the sealing support plate part 321. The first original position returning part 326 may be connected to the first moving plate part 322 and may return the first moving plate part 322 moved by the first moving plate moving part 323 to an original position thereof.

As illustrated in FIGS. 10 and 11, the first original position returning part 326 according to the present embodiment may include a first returning fixing block 326a coupled to the sealing support plate part 321, the first moving plate protrusion block 326b that is coupled to the first moving plate part 322 and passes through the first through-hole 321c formed in the sealing support plate part 321, and a first returning elastic body 326c that is coupled to the first returning fixing block 326a, is connected to the first moving plate protrusion block 326b, and elastically presses the first moving plate protrusion block 326b.

The first returning fixing block 326a may be coupled to an upper surface of the sealing support plate part 321. The first moving plate protrusion block 326b may be coupled to an upper surface of the first moving plate part 322. The first moving plate protrusion block 326b may pass through the first through-hole 321c of the sealing support plate part 321 and may be disposed to face the first returning fixing block 326a.

One end of the first returning elastic body 326c may be coupled to the first returning fixing block 326a, and the other end thereof may be coupled to the first moving plate protrusion block 326b. The first returning elastic body 326c may provide an elastic force to the first moving plate part 322 moved by the first moving plate moving part 323 to return the first moving plate part 322 to an original position thereof.

The second original position returning part 327 may be coupled to the sealing support plate part 321. The second original position returning part 327 may be connected to the second moving plate part 324 and may return the second moving plate part 324 moved by the second moving plate moving part 325 to an original position thereof.

As illustrated in FIGS. 10 and 11, the second original position returning part 327 according to the present embodiment may include a second returning fixing block 327a coupled to the sealing support plate part 321, the second moving plate protrusion block 327b that is coupled to the second moving plate part 324 and passes through the second through-hole 321d formed in the sealing support plate part 321, and a second returning elastic body 327c that is coupled to the second returning fixing block 327a, is connected to the second moving plate protrusion block 327b, and elastically presses the second moving plate protrusion block 327b.

The second returning fixing block 327a may be coupled to the upper surface of the sealing support plate part 321. The second moving plate protrusion block 327b may be coupled to an upper surface of the second moving plate part 324. The second moving plate protrusion block 327b may pass through the second through-hole 321d of the sealing support plate part 321 and may be disposed to face the second returning fixing block 327a.

One end of the second returning elastic body 327c may be coupled to the second returning fixing block 327a, and the other end thereof may be coupled to the second moving plate protrusion block 327b. The second returning elastic body 327c may provide an elastic force to the second moving plate part 324 moved by the second moving plate moving part 325 to return the second moving plate part 324 to an original position thereof.

The sealing cam rail unit 330 may be coupled to the sealing device frame 310. The sealing cam rail unit 330 may be disposed adjacent to the sealing pressing unit 320, may be connected to the sealing pressing unit 320 while the sealing pressing unit 320 moves, and may move the first sealing pad P1 and the second sealing pad P2 in a direction in which the first sealing pad P1 and the second sealing pad P2 approach each other.

As illustrated in FIGS. 2 and 14, the sealing cam rail unit 330 according to the present embodiment may include the first sealing support rail part 331, in which the first rotating roller 323b moves along a side surface thereof, and the second sealing support rail part 332, in which the second rotating roller 325b moves along a side surface thereof.

As illustrated in FIG. 14, the side surface of the first sealing support rail part 331 is inclined, and thus the first rotating roller 323b in contact with the inclined side surface of the first sealing support rail part 331 may move leftward in FIG. 14. The leftward movement of the first rotating roller 323b may allow the first moving plate part 322 to move in a leftward direction. When the first moving plate part 322 moves leftward, the first sealing pad P1 coupled to the first moving plate part 322 may also move leftward.

As illustrated in FIG. 14, the side surface of the second sealing support rail part 332 is inclined, and thus the second rotating roller 325b in contact with the inclined side surface of the second sealing support rail part 332 may move rightward in FIG. 14. The rightward movement of the second rotating roller 325b may allow the second moving plate part 324 to move in a rightward direction. When the second moving plate part 324 moves rightward, the second sealing pad P2 coupled to the second moving plate part 324 may also move rightward.

The sealing moving unit 340 may be connected to the sealing pressing unit 320. The sealing moving unit 340 may move the sealing pressing unit 320 relative to the sealing cam rail unit 330.

As illustrated in FIGS. 1 and 2, the sealing moving unit 340 according to the present embodiment may include the sealing chain part 341 coupled to the sealing pressing unit 320, a sealing pulley part 342 connected to the sealing chain part 341, and a sealing driving motor 343 that is connected to the sealing pulley part 342 and rotates the sealing pulley part 342.

The sealing chain part 341 may be coupled to the sealing support plate part 321 of the sealing pressing unit 320. In the present embodiment, a pair of sealing chain parts 341 may be provided and may be coupled to both end areas of the sealing support plate part 321, respectively.

The sealing pulley part 342 may be rotatably coupled to the sealing device frame 310. The sealing chain part 341 may be connected to the sealing pulley part 342.

The sealing driving motor 343 may be supported by the sealing device frame 310. The sealing driving motor 343 may be connected to the sealing pulley part 342 to rotate the sealing pulley part 342.

Hereinafter, the in-line dumpling forming system according to the present embodiment will be described with reference to FIGS. 1 to 14.

The dumpling skin cutting device 100 may press the noodle sheet for the dumpling skin with the dumpling skin pressing unit 220 of the dumpling forming lower folding device 200. The dumpling skin cut by the pressing of the dumpling skin cutting device 100 may be disposed in the dumpling skin seated area "K".

The dumpling skin pressing unit 220 moves by the folding moving unit 240 so that the support finger rotating roller 228b and the gathering finger rotating roller 225b may come into contact with the upper surfaces of the support finger support rail part 231 and the gathering finger support rail part 232 of the folding cam rail unit 230.

The support finger rotating roller 228b and the gathering finger rotating roller 225b are raised according to shapes of the upper surfaces of the support finger support rail part 231 and the gathering finger support rail part 232 of the folding cam rail unit 230, and thus the support finger SF and the gathering finger GF may be rotated and raised as illustrated in FIG. 7.

In this case, as illustrated in FIG. 7B, the two support fingers SF may be rotated before the gathering finger GF to press a lower surface of the dumpling skin seated on the dumpling skin seated area "K" so as to slightly lift both sides of the dumpling skin.

Thereafter, as illustrated in FIG. 7C, the four gathering fingers GF may be rotated to secondarily press the dumpling skin pressed by the support fingers SF.

Next, as illustrated in FIG. 7D, the two support fingers SF may be rotated at a larger angle to strongly press the dumpling skin.

As described above, the dumpling skin may be folded by the raising of the support fingers SF and the gathering fingers GF, and the folded dumpling skin may continuously move to reach the sealing device 300.

The sealing device 300 may press, with the first sealing pad P1 and the second sealing pad P2, the dumpling having the dumpling skin folded by the dumpling forming lower folding device 200, may attach the dumpling skin to the dumpling, and thus may form the dumpling having a final shape.

In this way, the in-line dumpling forming system according to the present embodiment may include the dumpling skin cutting device 100 that forms the dumpling skin by cutting the supplied noodle sheet for the dumpling skin, the dumpling forming lower folding device 200 that is disposed in a lower area of the dumpling skin cutting device 100 and presses and folds the dumpling skin to which the dumpling filling is supplied, and the sealing device 300 that is disposed in an upper area of the dumpling forming lower folding device 200 and presses and seals the folded dumpling skin. Thus, an installation area may be reduced by positioning the dumpling skin cutting device 100 and the sealing device 300 on the upper area of the dumpling forming lower folding device 200. Accordingly, productivity is high compared to the installation area, and the dumpling may be formed into an accurate shape, and thus occurrence of defects may be reduced.

Although the present embodiment has been described in detail with reference to the accompanying drawings, the scope of rights of the present embodiment is not limited to the above-described drawings and description.

In this way, the present disclosure is not limited to the described embodiments, and it is obvious to those skilled in the art that various changes and modifications may be made without departing from the spirit and scope of the present disclosure. Thus, the changes or modifications should belong to the appended claims of the present disclosure.

### [Industrial Applicability]

The present invention can be used in an in-line product molding system, especially in the in-line food processing industry.

## Claims

1. An in-line dumpling forming system comprising:
a dumpling skin cutting device (100) configured to cut a noodle sheet to form a dumpling skin;
a dumpling forming lower folding device (200) which is disposed in a lower area of the dumpling skin cutting device (100), on which the cut dumpling skin is seated, and which presses and folds the dumpling skin to which dumpling filling is supplied; and
a sealing device (300) disposed on an upper area of the dumpling forming lower folding device (200) and configured to press and seal the folded dumpling skin;
**characterized in that**
the sealing device (300) includes:
a sealing pressing unit (320) including a first sealing pad (P1) configured to press the dumpling skin folded by the dumpling forming lower folding device (200) and a second sealing pad (P2) spaced apart from the first sealing pad (P1) and configured to press the dumpling skin in a direction of the first sealing pad (P1);
a sealing cam rail unit (330) connected to the sealing pressing unit (320) and configured to move the first sealing pad (P1) and the second sealing pad (P2); and
a sealing moving unit (340) connected to the sealing pressing unit (320) and configured to move the sealing pressing unit (320) relative to the sealing cam rail unit (330); and
wherein the sealing pressing unit (320) includes:
a sealing support plate part (321) connected to the sealing moving unit (340);
a first moving plate part (322) which is coupled to the sealing support plate part (321) to be relatively movable and to which the first sealing pad (P1) is coupled;
a first moving plate moving part (323) coupled to the first moving plate part (322), connected to the sealing cam rail unit (330), and configured to move the first moving plate part (322);
a second moving plate part (324) which is coupled to the sealing support plate part (321) to be relatively movable and to which the second sealing pad (P2) is coupled;
a second moving plate moving part (325) coupled to the second moving plate part (324), connected to the sealing cam rail unit (330), and configured to move the second moving plate part (324);
a first original position returning part (326) coupled to the sealing support plate part (321), connected to the first moving plate part (322), and configured to return the first moving plate part (322) moved by the first moving plate moving part (323) to an original position thereof; and
a second original position returning part (327) coupled to the sealing support plate part (321), connected to the second moving plate part (324), and configured to return the second moving plate part (324) moved by the second moving plate moving part (325) to an original position thereof.

2. The in-line dumpling forming system of claim 1, wherein the dumpling skin cutting device (100) includes:
a cutting device frame (110);
a first noodle sheet presser (120) supported by the cutting device frame (110) and configured to primarily press the noodle sheet with a protrusion cutter (221a) formed in the dumpling forming lower folding device (200); and
a second noodle sheet presser (130) supported by the cutting device frame (110), spaced apart from the first noodle sheet presser (120), and configured to secondarily press, with the protrusion cutter (221a), the noodle sheet primarily pressed by the first noodle sheet presser (120).

3. The in-line dumpling forming system of claim 2, wherein the first noodle sheet presser (120) includes:
a first rotational bar part (121) rotatably coupled to the cutting device frame (110);
a first pressing roller part (122) rotatably coupled to the first rotational bar part (121) and configured to press the noodle sheet; and
a first height adjusting part (123) supported by the cutting device frame (110), connected to the first rotational bar part (121), and configured to adjust a height of the first pressing roller part (122) with respect to the protrusion cutter (221a) by adjusting a rotational angle of the first rotational bar part (121).

4. The in-line dumpling forming system of claim 2, wherein the second noodle sheet presser (130) includes:
a second rotational bar part (131) rotatably coupled to the cutting device frame;
a second pressing roller part (132) rotatably coupled to the second rotational bar part (131) and configured to press the noodle sheet; and
a second height adjusting part (133) supported by the cutting device frame (110), connected to the second rotational bar part (131), and configured to adjust a height of the second pressing roller part (132) with respect to the protrusion cutter (221a) by adjusting a rotational angle of the second rotational bar part (131).

5. The in-line dumpling forming system of claim 1, wherein a plurality of sealing pressing units (320) are provided, and the plurality of sealing pressing units are arranged in a caterpillar form.

6. The in-line dumpling forming system of claim 1, wherein the first moving plate moving part (323) includes:
a first rotation center shaft (323a) coupled to the first moving plate part (322); and
a first rotating roller (323b) rotatably coupled to the first rotation center shaft (323a).

7. The in-line dumpling forming system of claim 6, wherein the second moving plate moving part (325) includes:
a second rotation center shaft (325a) coupled to the second moving plate part (324); and
a second rotating roller (325b) rotatably coupled to the second rotation center shaft (325a).

8. The in-line dumpling forming system of claim 1, wherein the first original position returning part (326) includes:
a first returning fixing block (326a) coupled to the sealing support plate part (321);
a first moving plate protrusion block (326b) coupled to the first moving plate part (322) and passing through a first through-hole (321c) formed in the sealing support plate part (321); and
a first returning elastic body (326c) coupled to the first returning fixing block (326a), connected to the first moving plate protrusion block (326b), and configured to press the first moving plate protrusion block (326b).

9. The in-line dumpling forming system of claim 1, wherein the second original position returning part (327) includes:
a second returning fixing block (327a) coupled to the sealing support plate part (321);
a second moving plate protrusion block (327b) coupled to the second moving plate part (324) and passing through a second through-hole (321d) formed in the sealing support plate part (321); and
a second returning elastic body (327c) coupled to the second returning fixing block (327a), connected to the second moving plate protrusion block (327b), and configured to press the second moving plate protrusion block (327b).

10. The in-line dumpling forming system of claim 7, wherein the sealing cam rail unit (330) includes:
a first sealing support rail part (331) in which the first rotating roller (323b) moves along a side surface thereof; and
a second sealing support rail part (332) in which the second rotating roller (325b) moves along a side surface thereof.

## Patentansprüche

1. Inline-Teigtaschenbildungssystem, umfassend:
eine Teigtaschenblatt-Schneidevorrichtung (100), die konfiguriert ist, um eine Nudelteigplatte zu schneiden, um eine Teigtaschenblatt zu bilden;
eine untere Teigtaschenbildung-Faltvorrichtung (200), die in einem unteren Bereich der Teigtaschenblatt-Schneidevorrichtung (100) angeordnet ist, auf der die geschnittene Teigtaschenblatt sitzt, und die die Teigtaschenblatt, der die Teigtaschenfüllung zugeführt wird, presst und faltet; und
eine Versiegelungsvorrichtung (300), die an einem oberen Bereich der unteren Teigtaschenbildung-Faltvorrichtung (200) angeordnet ist und zum Pressen und Versiegeln der gefalteten Teigtaschenblatt konfiguriert ist;
**dadurch gekennzeichnet, dass** die Versiegelungsvorrichtung (300) Folgendes beinhaltet:
eine Versiegelungspresseinheit (320), die ein erstes Versiegelungskissen (P1), das konfiguriert ist, um die durch die untere Teigtaschenbildung-Faltvorrichtung (200) gefaltete Teigtaschenblatt zu pressen, und ein zweites Versiegelungskissen (P2), das von dem ersten Versiegelungskissen (P1) beabstandet und konfiguriert ist, um die Teigtaschenblatt in einer Richtung des ersten Versiegelungskissens (P1) zu pressen, beinhaltet;
eine Versiegelungsnockenschieneneinheit (330), die mit der Versiegelungspresseinheit (320) verbunden und konfiguriert ist, um das erste Versiegelungskissen (P1) und das zweite Versiegelungskissen (P2) zu bewegen; und
eine Versiegelungsbewegungseinheit (340), die mit der Versiegelungspresseinheit (320) verbunden und konfiguriert ist, um die Versiegelungspresseinheit (320) in Bezug auf die Versiegelungsnockenschieneneinheit (330) zu bewegen; und
wobei die Versiegelungspresseinheit (320) Folgendes beinhaltet:
ein Versiegelungsträgerplattenteil (321), das mit der Versiegelungsbewegungseinheit (340) verbunden ist;
ein erstes Bewegungsplattenteil (322), das mit dem Versiegelungsträgerplattenteil (321) gekoppelt ist, um relativ bewegbar zu sein, und mit dem das erste Versiegelungskissen (P1) gekoppelt ist;
ein erstes Bewegungsplatten-Bewegungsteil (323), das mit dem ersten Bewegungsplattenteil (322) gekoppelt ist, mit der Versiegelungsnockenschieneneinheit (330) verbunden ist und konfiguriert ist, um das erste Bewegungsplattenteil (322) zu bewegen;
ein zweites Bewegungsplattenteil (324), das mit dem Versiegelungsträgerplattenteil (321) gekoppelt ist, um relativ bewegbar zu sein, und mit dem das zweite Versiegelungskissen (P2) gekoppelt ist;
ein zweites Bewegungsplatten-Bewegungsteil (325), das mit dem zweiten Bewegungsplattenteil (324) gekoppelt ist, mit der Versiegelungsnockenschieneneinheit (330) verbunden ist und konfiguriert ist, um das zweite Bewegungsplattenteil (324) zu bewegen;
ein erstes Ausgangsposition-Rückstellteil (326), das mit dem Versiegelungsträgerplattenteil (321) gekoppelt ist, mit dem ersten Bewegungsplattenteil (322) verbunden und konfiguriert ist, um das erste Bewegungsplattenteil (322), das von dem ersten Bewegungsplatten-Bewegungsteil (323) bewegt wird, in seine Ausgangsposition zurückzustellen; und
ein zweites Ausgangsposition-Rückstellteil (327), das mit dem Versiegelungsträgerplattenteil (321) gekoppelt ist, mit dem zweiten Bewegungsplattenteil (324) verbunden und konfiguriert ist, um das zweite Bewegungsplattenteil (324), das durch das zweite Bewegungsplatten-Bewegungsteil (325) bewegt wird, in seine Ausgangsposition zurückzustellen.

2. Inline-Teigtaschenbildungssystem nach Anspruch 1, wobei die Teigtaschenblatt-Schneidevorrichtung (100) Folgendes beinhaltet:
einen Schneidevorrichtungsrahmen (110);
eine erste Nudelteigplattenpresse (120), die von dem Schneidevorrichtungsrahmen (110) getragen wird und konfiguriert ist, um die Nudelteigplatte in erster Linie mit einem Vorsprungsschneider (221a) zu pressen, der in der unteren Teigtaschenbildung-Faltvorrichtung (200) gebildet ist; und
eine zweite Nudelteigplattenpresse (130), die von dem Schneidevorrichtungsrahmen (110) getragen wird, von der ersten Nudelteigplattenpresse (120) beabstandet und konfiguriert ist, um die Nudelteigplatte, die primär von der ersten Nudelteigplattenpresse (120) gepresst wird, sekundär mit dem Vorsprungsschneider (221a) zu pressen.

3. Inline-Teigtaschenbildungssystem nach Anspruch 2, wobei die erste Nudelteigplattenpresse (120) Folgendes beinhaltet:
ein erstes drehendes Stangenteil (121), das drehbar mit dem Schneidevorrichtungsrahmen (110) gekoppelt ist;
ein erstes pressendes Walzenteil (122), das drehbar mit dem ersten drehenden Stangenteil (121) gekoppelt und konfiguriert ist, um die Nudelteigplatte zu pressen; und
ein erstes Höhenverstellteil (123), das von dem Schneidevorrichtungsrahmen (110) getragen wird, mit dem ersten drehenden Stangenteil (121) verbunden und konfiguriert ist, um durch Einstellen eines Drehwinkels des ersten drehenden Stangenteils (121) eine Höhe des ersten pressenden Walzenteils (122) in Bezug auf den Vorsprungschneider (221a) einzustellen.

4. Inline-Teigtaschenbildungssystem nach Anspruch 2, wobei die zweite Nudelteigplattenpresse (130) Folgendes beinhaltet:
ein zweites drehendes Stangenteil (131), das drehbar mit dem Schneidevorrichtungsrahmen verbunden ist;
ein zweites pressendes Walzenteil (132), das drehbar mit dem zweiten drehenden Stangenteil (131) gekoppelt und konfiguriert ist, um die Nudelteigplatte zu pressen; und
ein zweites Höhenverstellteil (133), das von dem Schneidevorrichtungsrahmen (110) getragen wird, mit dem zweiten drehenden Stangenteil (131) verbunden und konfiguriert ist, um durch Einstellen eines Drehwinkels des zweiten drehenden Stangenteils (131) eine Höhe des zweiten pressenden Walzenteils (132) in Bezug auf den Vorsprungschneider (221a) einzustellen.

5. Inline-Teigtaschenbildungssystem nach Anspruch 1, wobei eine Vielzahl von Versiegelungspresseinheiten (320) bereitgestellt ist und die Vielzahl von Versiegelungspresseinheiten in einer Raupenform angeordnet ist.

6. Inline-Teigtaschenbildungssystem nach Anspruch 1, wobei das erste Bewegungsplatten-Bewegungsteil (323) Folgendes beinhaltet:
eine erste Drehmittelwelle (323a), die mit dem ersten Bewegungsplattenteil (322) gekoppelt ist; und
eine erste drehende Walze (323b), die drehbar mit der ersten Drehmittelwelle (323a) gekoppelt ist.

7. Inline-Teigtaschenbildungssystem nach Anspruch 6, wobei das zweite Bewegungsplatten-Bewegungsteil (325) Folgendes beinhaltet:
eine zweite Drehmittelwelle (325a), die mit dem zweiten Bewegungsplattenteil (324) gekoppelt ist; und
eine zweite drehende Walze (325b), die drehbar mit der zweiten Drehmittelwelle (325a) gekoppelt ist.

8. Inline-Teigtaschenbildungssystem nach Anspruch 1, wobei das erste Ausgangsposition-Rückstellteil (326) Folgendes beinhaltet:
einen ersten rückstellenden Befestigungsblock (326a), der mit dem Versiegelungsträgerplattenteil (321) gekoppelt ist;
einen ersten Bewegungsplattenvorsprungsblock (326b), der mit dem ersten Bewegungsplattenteil (322) gekoppelt ist und durch ein erstes Durchgangsloch (321c) verläuft, das in dem Versiegelungsträgerplattenteil (321) gebildet ist; und
einen ersten elastischen Rückstellkörper (326c), der mit dem ersten rückstellenden Befestigungsblock (326a) gekoppelt ist, mit dem ersten Bewegungsplattenvorsprungsblock (326b) verbunden und konfiguriert ist, um den ersten Bewegungsplattenvorsprungsblock (326b) zu pressen.

9. Inline-Teigtaschenbildungssystem nach Anspruch 1, wobei das zweite Ausgangsposition-Rückstellteil (327) Folgendes beinhaltet:
einen zweiten rückstellenden Befestigungsblock (327a), der mit dem Versiegelungsträgerplattenteil (321) gekoppelt ist;
einen zweiten Bewegungsplattenvorsprungsblock (327b), der mit dem zweiten Bewegungsplattenteil (324) gekoppelt ist und durch ein zweites Durchgangsloch (321d) verläuft, das in dem Versiegelungsträgerplattenteil (321) gebildet ist; und
einen zweiten elastischen Rückstellkörper (327c), der mit dem zweiten rückstellenden Befestigungsblock (327a) gekoppelt ist, mit dem zweiten Bewegungsplattenvorsprungsblock (327b) verbunden und konfiguriert ist, um den zweiten Bewegungsplattenvorsprungsblock (327b) zu pressen.

10. Inline-Teigtaschenbildungssystem nach Anspruch 7, wobei die Versiegelungsnockenschieneneinheit (330) Folgendes beinhaltet:
ein erstes Versiegelungsträgerschienenteil (331), in dem sich die erste drehende Walze (323b) entlang einer Seitenfläche davon bewegt; und
ein zweites Versiegelungsträgerschienenteil (332), in dem sich die zweite drehende Walze (325b) entlang einer Seitenfläche davon bewegt.

## Revendications

1. Système de formation de boulettes de pâte en ligne, comprenant :
un dispositif de découpe d'enveloppe de boulette (100) configuré pour découper une feuille de pâte afin de former une enveloppe de boulette ;
un dispositif de pliage inférieur de formation de boulettes de pâte (200) qui est disposé dans une zone inférieure du dispositif de découpe d'enveloppe de boulette (100), sur lequel l'enveloppe de boulette découpée est placée, et qui presse et plie l'enveloppe de boulette à laquelle la farce à boulette est fournie ; et
un dispositif de scellement (300) disposé dans une zone supérieure du dispositif de pliage inférieur de formation de boulettes de pâte (200) et configuré pour presser et sceller l'enveloppe de boulette pliée ;
**caractérisé en ce que** le dispositif de scellement (300) comprend :
une unité de pressage de scellement (320) comprenant un premier tampon de scellement (P1) configuré pour presser l'enveloppe de boulette pliée par le dispositif de pliage inférieur de formation de boulettes de pâte (200) et un deuxième tampon de scellement (P2), espacé du premier tampon de scellement (P1), et configuré pour presser l'enveloppe de boulette dans une direction du premier tampon de scellement (P1) ;
une unité de rail à came de scellement (330) reliée à l'unité de pressage de scellement (320) et configurée pour déplacer le premier tampon de scellement (P1) et le deuxième tampon de scellement (P2) ; et
une unité de déplacement pour scellement (340) reliée à l'unité de pressage de scellement (320) et configurée pour déplacer l'unité de pressage de scellement (320) par rapport à l'unité de rail à came de scellement (330) ; et
dans lequel l'unité de pressage de scellement (320) comprend :
une partie de plaque de support de scellement (321) reliée à l'unité de déplacement pour scellement (340) ;
une première partie de plaque mobile (322) qui est couplée à la partie de plaque de support de scellement (321) de manière à être relativement mobile et à laquelle le premier tampon de scellement (P1) est couplé ;
une première partie de déplacement de plaque mobile (323) couplée à la première partie de plaque mobile (322), reliée à l'unité de rail à came de scellement (330) et configurée pour déplacer la première partie de plaque mobile (322) ;
une deuxième partie de plaque mobile (324) qui est couplée à la partie de plaque de support de scellement (321) de manière à être relativement mobile et à laquelle le deuxième tampon de scellement (P2) est couplé ;
une deuxième partie de déplacement de plaque mobile (325) couplée à la deuxième partie de plaque mobile (324), reliée à l'unité de rail à came de scellement (330) et configurée pour déplacer la deuxième partie de plaque mobile (324) ;
une première partie de retour à la position d'origine (326) couplée à la partie de plaque de support de scellement (321), reliée à la première partie de plaque mobile (322) et configurée pour ramener la première partie de plaque mobile (322) déplacée par la première partie de déplacement de plaque mobile (323) à sa position d'origine ; et
une deuxième partie de retour à la position d'origine (327) couplée à la partie de plaque de support de scellement (321), reliée à la deuxième partie de plaque mobile (324) et configurée pour ramener la deuxième partie de plaque mobile (324) déplacée par la deuxième partie de déplacement de plaque mobile (325) à sa position d'origine.

2. Système de formation de boulettes de pâte en ligne selon la revendication 1, dans lequel le dispositif de découpe de l'enveloppe de boulette (100) comprend :
un châssis de dispositif de découpe (110) ;
un premier pressoir de feuille de pâte (120) supporté par le châssis de dispositif de découpe (110) et configuré pour presser premièrement la feuille de pâte avec un emporte-pièce en saillie (221a) formé dans le dispositif de pliage inférieur de formation de boulettes de pâte (200) ; et
un deuxième pressoir de feuille de pâte (130) supporté par le châssis de dispositif de découpe (110), espacé du premier pressoir de feuille de pâte (120) et configuré pour presser secondairement, avec l'emporte-pièce en saillie (221a), la feuille de pâte pressée premièrement par le premier pressoir de feuille de pâte (120).

3. Système de formation de boulettes de pâte en ligne selon la revendication 2, dans lequel le premier pressoir de feuille de pâte (120) comprend :
une première partie de barre rotative (121) couplée en rotation au châssis de dispositif de découpe (110) ;
une première partie de rouleau de pressage (122) couplée en rotation à la première partie de barre rotative (121) et configurée pour presser la feuille de pâte ; et
une première partie de réglage de hauteur (123) supportée par le châssis de dispositif de découpe (110), reliée à la première partie de barre rotative (121) et configurée pour régler la hauteur de la première partie de rouleau de pressage (122) par rapport à l'emporte-pièce en saillie (221a) en réglant l'angle de rotation de la première partie de barre rotative (121).

4. Système de formation de boulettes de pâte en ligne selon la revendication 2, dans lequel le deuxième pressoir de feuille de pâte (130) comprend :
une deuxième partie de barre rotative (131) couplée en rotation au châssis de dispositif de découpe ;
une deuxième partie de rouleau de pressage (132) couplée en rotation à la deuxième partie de barre rotative (131) et configurée pour presser la feuille de pâte ; et
une deuxième partie de réglage de hauteur (133) supportée par le châssis de dispositif de découpe (110), reliée à la deuxième partie de barre rotative (131) et configurée pour régler la hauteur de la deuxième partie de rouleau de pressage (132) par rapport à l'emporte-pièce en saillie (221a) en réglant l'angle de rotation de la deuxième partie de barre rotative (131).

5. Système de formation de boulettes de pâte en ligne selon la revendication 1, dans lequel une pluralité d'unités de pressage de scellement (320) sont prévues, et la pluralité d'unités de pressage de scellement sont agencées en forme de chenille.

6. Système de formation de boulettes de pâte en ligne selon la revendication 1, dans lequel la première partie de déplacement de plaque mobile (323) comprend :
un premier arbre central de rotation (323a) couplé à la première partie de plaque mobile (322) ; et
un premier rouleau rotatif (323b) couplé en rotation au premier arbre central de rotation (323a).

7. Système de formation de boulettes de pâte en ligne selon la revendication 6, dans lequel la deuxième partie de déplacement de plaque mobile (325) comprend :
un deuxième arbre central de rotation (325a) couplé à la deuxième partie de plaque mobile (324) ; et
un deuxième rouleau rotatif (325b) couplé en rotation au deuxième arbre central de rotation (325a).

8. Système de formation de boulettes de pâte en ligne selon la revendication 1, dans lequel la première partie de retour à la position d'origine (326) comprend :
un premier bloc de fixation de retour (326a) couplé à la partie de plaque de support de scellement (321) ;
un premier bloc de saillie de plaque mobile (326b) couplé à la première partie de plaque mobile (322) et passant à travers un premier trou traversant (321c) formé dans la partie de plaque de support de scellement (321) ; et
un premier corps élastique de retour (326c) couplé au premier bloc de fixation de retour (326a), relié au premier bloc de saillie de plaque mobile (326b) et configuré pour presser le premier bloc de saillie de plaque mobile (326b).

9. Système de formation de boulettes de pâte en ligne selon la revendication 1, dans lequel la deuxième partie de retour à la position d'origine (327) comprend :
un deuxième bloc de fixation de retour (327a) couplé à la partie de plaque de support de scellement (321) ;
un deuxième bloc de saillie de plaque mobile (327b) couplé à la deuxième partie de plaque mobile (324) et passant à travers un deuxième trou traversant (321d) formé dans la partie de plaque de support de scellement (321) ; et
un deuxième corps élastique de retour (327c) couplé au deuxième bloc de fixation de retour (327a), relié au deuxième bloc de saillie de plaque mobile (327b) et configuré pour presser le deuxième bloc de saillie de plaque mobile (327b).

10. Système de formation de boulettes de pâte en ligne selon la revendication 7, dans lequel l'unité de rail à came de scellement (330) comprend :
une première partie de rail de support de scellement (331) dans laquelle le premier rouleau rotatif (323b) se déplace le long d'une surface latérale de celle-ci ; et
une deuxième partie de rail de support de scellement (332) dans laquelle le deuxième rouleau rotatif (325b) se déplace le long d'une surface latérale de celle-ci.
